# EUROPÄISCHE PATENTSCHRIFT

(11) **EP 1 022 481 B1**
(45) Veröffentlichungstag und Bekanntmachung des Hinweises auf die Patenterteilung: **23.04.2003**
(21) Anmeldenummer: 99122676.2
(22) Anmeldetag: 15.11.1999
(51) Int. Cl.: F16D 69/02

(54) **Reibflächenbeschichtung für einen Reibwerkstoff eines Bremssystems**
Surface coating for a friction element of a brake system
Couche de revêtement pour élément de friction d'un système de freins

(30) Priorität: 20.01.1999 DE 29900868 U; 27.01.1999 DE 29901314 U
(43) Veröffentlichungstag der Anmeldung: 26.07.2000
(73) Patentinhaber: AlliedSignal Bremsbelag GmbH, 21509 Glinde (DE)
(72) Erfinder: Schoo, Norbert Dr., 21029 Hamburg (DE); Schwarz, Uwe, 23911 Buchholz (DE); Grimme, Hansjörg, 21509 Glinde (DE); Pfannebecker, Thomas, 22041 Hamburg (DE)
(74) Vertreter: Richter, Werdermann & Gerbaulet

(56) Entgegenhaltungen:
- WO-A-81/01375
- WO-A-98/40641
- DE-U- 29 901 314
- GB-A- 2 155 809
- US-A- 5 622 785

## Beschreibung

Die Erfindung betrifft eine Reibflächenbeschichtung für einen Reibwerkstoff eines Bremssystems, insbesondere für ein Kraftfahrzeug, einen Lastkraftwagen, ein Schienenfahrzeug bzw. ein Luftfahrzeug, gemäß dem Oberbegriff des Anspruchs 1 und einen Bremsbelag, insbesondere für eine Scheibenbremse, mit einer Trägerplatte und einem auf dieser angeordneten Reibwerkstoffblock gemäß dem Oberbegriff des Anspruchs 14.

Bei dem tribologischen System Scheibenbremse stellt sich ein gewünschter Reibwert zwischen einer Bremsscheibe und einem Bremsbelag erst nach einer gewissen Anzahl von Bremsvorgängen ein. Diese Bremsvorgänge, in denen eine neue, noch nicht eingefahrene Reibpaarung einen stark vom Einfahrzustand abhängigen Reibwert besitzt, bezeichnet man auch als Einlaufbremsungen. Für den Reibwert sind geometrische Anpassungen zwischen Bremsbelag und Bremsscheibe und eine tribologische Grenzschichtbildung, allgemein als Reibkohle bezeichnet, wesentliche Einflussparameter. Erst wenn die Grenzschicht und Geometrie in ausreichendem Maße durch die Einlaufbremsungen aufgebaut sind, kommt man mit dem Reibwert des Systems in den sogn. Beharrungszustand. Somit erreicht die Reibpaarung erst nach einer relativ hohen Anzahl von Einlaufbremsungen einen eingelaufenen Zustand und somit ein gewünschtes Reibwertniveau.

Bei gewissen fahrzeugtechnischen Einsatzbedingungen kommt es jedoch durch den Unterschied zwischen eingefahrenem und nicht eingefahrenem System zu Problemen. So werden beispielsweise LKW Trailer nach der Herstellung bremstechnisch überprüft. Hierbei muss das Fahrzeug bezogen auf neun Tonnen Achslast hoch gerechnet auf 6,5 bar mindestens 45% (50%) Verzögerung erreichen. Diese Versuche werden meistens auf Rollenprüfständen mit geringer Prüfgeschwindigkeit beim Hersteller vor Ort oder einem nächstgelegenen TÜV-Standort vorgenommen, zu dem das Fahrzeug mit sehr geringen Bremsdrücken gebracht wird. Die Verzögerungen müssen aber auch dynamisch bei der bremstechnischen Prüfung des Sattelzuges auf der Straße aus höheren Geschwindigkeiten erreicht werden. Hierbei erweist es sich als problematisch, dass ein neues Scheibenbremssystem im nicht eingefahrenen Zustand den vorgenannten Forderungen meist nicht genügt.

Durch die WO 98/40641 A ist ein Reibbelag für eine Bremsanordnung bekannt, der geeignet ist, in der anfänglichen Einlaufzeit der Bremsen eine korrosionsbeständige Beschichtung von einem Rotor oder einer Trommel zu entfernen und gute Bremseigenschaften sowohl während als auch nach der Einlaufzeit aufrechtzuerhalten. Hierzu enthält der Belag einen Reibwerkstoff mit einer Oberfläche, die für die Berührung mit einem Bremsteil ausgebildet ist. Die Oberfläche weist eine Beschichtung auf, die Reibpartikel mit einer Mohs-Härte von 5,5 bis 7,5 und Reibpartikel mit einer Mohs-Härte von 8,0 bis 9,5 enthält. Damit wird eine Oberflächenbeschichtung für einen Reibbelag aus zwei Komponenten aus Reibpartikeln mit unterschiedlichen Mohs-Härten-Bereichen geschaffen. Der Bremsbelag soll somit in der Lage sein, eine korrosionsbeständige Beschichtung während der anfänglichen Einlaufzeit der Bremsen von einem Bremsteil, wie Rotor oder Trommel, zu entfernen. Die dabei eingesetzten Reibwerkstoffe enthalten demnach einen oder mehrere wärmehärtende Harzbindemittel (beispielsweise Phenolharze, wie etwa Phenolformaldehydharze, Epoxyharze), Verstärkungsfasern (beispielsweise Aramid, Stahl, Akryl, Metallpulver (beispielsweise Eisen, Kupfe, Messing, Zink, Aluminium, Antimon u. ä.), Festschmierstoffe (beispielsweise Molybdändisulfid, Graphit, Koks, Zinndisulfid, Antimontrisulfid), Reibstoffe (beispielsweise Zinnoxid, Magnesia, Siliziumdioxid, Eisenoxid, Aluminiumoxid, Rutil (TiO₂) u. ä.), organische Füllstoffe (beispielsweise Gummipartikel, Partikel aus den Schalen von Cashewnüssen, Nitrilkautschukpartikel) und anorganische Füllstoffe (beispielsweise Schwerspat, Gips, Glimmer, Titanate u. ä.). Elastomere werden jedoch nicht eingesetzt. Wesentlich sind jedoch diejenigen Komponenten, die die Reibpartikel mit den beiden unterschiedlichen Mohs-Härten-Bereiche ausmachen.

Es ist Aufgabe der vorliegenden Erfindung, eine Verbesserung des tribologischen Systems Bremse, insbesondere Scheibenbremse, zur Verfügung zu stellen, welches die obengenannten Nachteile beseitigt und auch im nicht eingefahrenen Zustand ausreichende Reibwerte erreicht.

Diese Aufgabe wird durch eine Reibflächenbeschichtung der o.g. Art mit den in Anspruch 1 gekennzeichneten Merkmalen und durch einen Bremsbelag der o.g. Art mit den in Anspruch 14 gekennzeichneten Merkmalen gelöst.

Dazu ist erfindungsgemäß eine Reibflächenbeschichtung vorgesehen, welche folgende Zusammensetzung aufweist, 0 - 30 Gew.-% Phenolharz,
5 - 95 Gew.-% Aluminiumoxid,
0 - 20 Gew.-% Siliziumoxid, 5 - 75 Gew.-% Kleber, 0 bis 10 Gew.-% Netzmittel,
0 - 50 Gew.-% Elastomer und 0 - 50 Gew.-% Füllstoff.

Dies hat den Vorteil, dass in jedem Testzustand einer Bremsanlage, beispielsweise eines Fahrzeuges, auch bei noch nicht eingefahrenem (Scheiben-)Bremssystem ein ausreichender und zuverlässiger Reibwert erzielt wird. Der Reibwert des nicht eingefahrenen Systems aus Bremsscheibe mit Bremsbelägen und darauf angeordneter Beschichtung entspricht dabei im Wesentlichen demjenigen Reibwert des eingefahrenen Systems. Dadurch erreicht das nicht eingefahrene System mit der erfindungsgemäßen Beschichtung unter allen Prüfbedingungen, wie Rollen-PS vor Ort, Rollen-PS vom Herstellungsort getrennt, dynamische Prüfung eines Lastzuges, zuverlässig eine geforderte Abbremsung. Hierbei entfaltet die erfindungsgemäße Beschichtung auch unter verschiedenen Relativgeschwindigkeiten zwischen Bremsbelag und Bremsscheibe seine vorteilhafte Wirkung. Gleichzeitig ist die Beschichtung ausreichend abriebfest, so dass sie auch dann funktioniert, wenn der Prüfort vom Herstellungsort entfernt ist. Ferner gibt es keinen Einbruch des Reibwertes beim Übergang von der Wirkung der Beschichtung zum eingelaufenen Zustand.

Vorzugsweise Weitergestaltungen der Reibflächenbeschichtung sind in den Unteransprüchen beschrieben.

Zum Auftragen der Reibflächenbeschichtung mittels Siebdruckverfahren, mit einer Farbspritzpistole oder einem getränktem Schaumstoff weist diese ferner in besonders vorteilhafter Weise 20 - 80 Gew.-%, insbesondere 50 Gew.-%, Lösungsmittel, insbesondere Wasser, auf.

Hierbei ist das Phenolharz beispielsweise ein Phenol-Resol in Wasser (70 - 80 % Festkörpergehalt), insbesondere Harz 9126 SW, das Aluminiumoxid, Korund in Form von Rhinalox Edelkorund weiß, das Siliziumoxid Kieselsäure, beispielsweise in Form eines hydrophoben SiO₂ als lockeres, weißes Pulver, insbesondere Aerosil R 972, der Kleber ein Phenol/Kresolharz-/NBR-Kleber auf Wasserbasis (Hydrokleber), insbesondere W9-9501 Kleber WK 700 C, das Netzmittel eine Mischung organischer Lösungsmittel und Additive, insbesondere ZG-1496 in Form eines bräunlichen Zusatzmittels, das Elastomer ein Gummi oder ein Gummimehl in Form eines Recyclats aus Laufflächen auf SBR/NR-Basis, wie Gummimehl 289 055, und der Füllstoff, z.B. ein Färbemittel, insbesondere Ruß, insbesondere Cabot Farbruß Elftex 430.

In einer ersten bevorzugten Ausführungsform weist die Reibflächenbeschichtung 3 Gew.-% Phenolharz, 54,8 Gew.-% Aluminiumoxid, 3,2 Gew.-% Siliziumoxid,
38 Gew.-% Kleber und 1 Gew.-% Netzmittel auf.

In einer zweiten bevorzugten Ausführungsform weist die Reibflächenbeschichtung 56,49 Gew.-% Aluminiumoxid, 3,3 Gew.-% Siliziumoxid, 39,18 Gew.-% Kleber und 1,03 Gew.-% Netzmittel auf.

In einer dritten bevorzugten Ausführungsform weist die Reibflächenbeschichtung 49,12 Gew.-% Aluminiumoxid, 2,87 Gew.-% Siliziumoxid, 34,07 Gew.-% Kleber, 0,9 Gew.-% Netzmittel und etwa 13,04 Gew.-% Elastomer auf.

In einer vierten bevorzugten Ausführungsform weist die Reibflächenbeschichtung 41,99 - 31,99 Gew.-% Aluminiumoxid, 10 - 20 Gew.-% Siliziumoxid, 34,07 Gew.-% Kleber, 0,9 Gew.-% Netzmittel und etwa 13,04 Gew.-% Elastomer auf.

Bei einem erfindungsgemäßen Bremsbelag der o.g. Art ist auf der Reibfläche eine Reibflächenbeschichtung wie zuvor beschrieben vorgesehen.

Nachstehend wird die Erfindung anhand der beigefügten Zeichnungen näher erläutert. Diese zeigen in
- Fig. 1: eine bevorzugte Ausführungsform eines erfindungsgemäßen Bremsbelages in Aufsicht,
- Fig. 2: in einer Schnittansicht entlang Linie II-II von Fig. 1 und
- Fig. 3: in einem Längsschnitt.

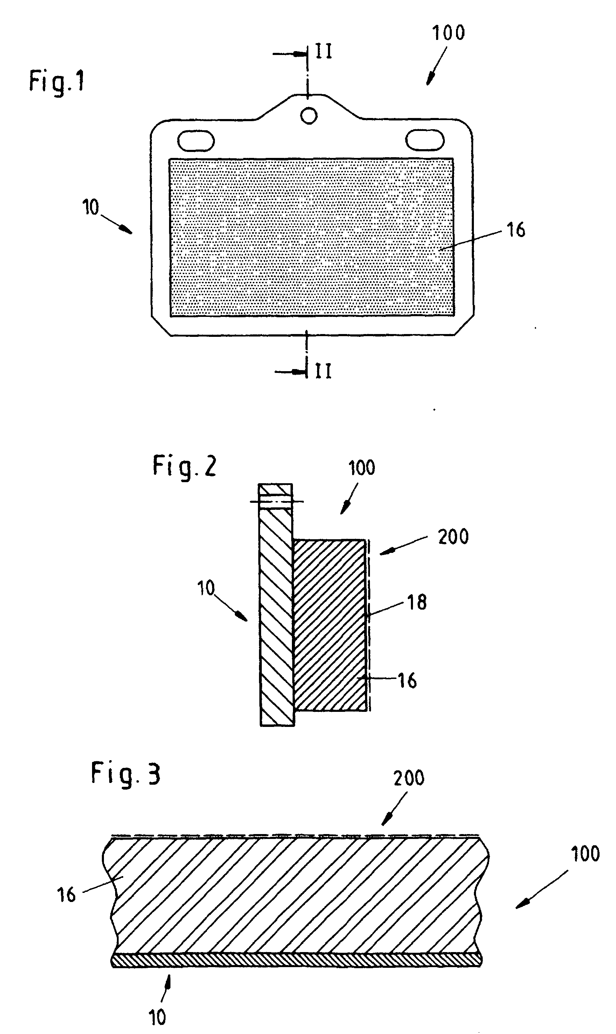

Die in Figuren 1 bis 3 dargestellte bevorzugte Ausführungsform eines Bremsbelags 100 umfasst eine Trägerplatte 10 auf dem ein Reibwerkstoffblock 16 angeordnet ist. Eine freie Fläche des Reibwerkstoffblockes 16 bildet eine Reibfläche 18 zu einer nicht dargestellten Bremsscheibe eines Bremssystems aus.

Auf der Reibfläche wird nach der Herstellung des Bremsblockes erfindungsgemäß eine Reibflächenbeschichtung 200 aufgebracht. Dies erfolgt beispielsweise mittels einer Farbpistole oder einem mit der Reibflächenbeschichtung getränkten Schwamm oder Schaumstoff. Bei dem bevorzugten Auftragungsverfahren erfolgt die Auftragung mit einem Rakel und einer der Reibbelagkontur angepaßten Schablone (modifiziertes Siebdruckverfahren).

Die erfindungsgemäße Reibflächenbeschichtung 200 beinhaltet erfindungsgemäß folgende Komponenten: 0 - 30 Gew.-% Phenolharz, 5 - 95 Gew.-% Aluminiumoxid, 0 - 20 Gew.-% Siliziumoxid, 5 - 75 Gew.-% Kleber, 0 bis 10 Gew.-% Netzmittel, 0 - 50 Gew.-% Elastomer und 0 - 50 Gew.-% Füllstoff.

Hierbei ist das Phenolharz ein Phenol-Resol in Wasser (70 - 80% Festkörpergehalt), insbesondere Harz 9126 SW, das Aluminiumoxid, Korund in Form von Rhinalox Edelkorund weiß, insbesondere Bikorit F 280, das Siliziumoxid Kieselsäure, beispielsweise in Form eines hydrophoben SiO₂ als lockeres, weißes Pulver, insbesondere Aerosil R 972, der Kleber ein Phenol-/Kresolharz-/NBR-Kleber auf Wasserbasis (Hydrokleber), insbesondere W9-9501 Kleber WK 700 C, das Netzmittel eine Mischung organischer Lösungsmittel und Additive, insbesondere ZG-1496 in Form eines bräunlichen Zusatzmittels, das Elastomer ein Gummi oder ein Gummimehl in Form eines Recyclates aus Laufflächen auf SBR/NR-Basis, insbesondere Gummimehl 289 055, und der Füllstoff z.B. ein Färbemittel, insbesondere Ruß, insbesondere Cabot Farbruß Elftex 430.

Zum Auftragen der erfindungsgemäßen Reibflächenbeschichtung wird diese in geeigneter Weise mit einem Lösungsmittel, wie beispielsweise Wasser, verdünnt, so dass die Reibflächenbeschichtung entsprechend dem Auftragungsverfahren verarbeitbar ist. Hierzu ist beispielsweise ein Lösungsmittelgehalt von 20 - 80 Gew.-%, insbesondere von 50 Gew.-%, vorgesehen.

Versuche mit verschiedenen Anteilen der o.g. Komponenten haben gezeigt, dass sich folgende bevorzugte Ausführungsformen besonders als Reibflächenbeschichtung eignen:

In einer ersten bevorzugten Ausführungsform weist die Reibflächenbeschichtung 3 Gew.-% Phenolharz, 54,8 Gew.-% Aluminiumoxid, 3,2 Gew.-% Siliziumoxid, 38 Gew.-% Kleber und 1 Gew.-% Netzmittel auf.

In einer zweiten bevorzugten Ausführungsform weist die Reibflächenbeschichtung 56,49 Gew.-% Aluminiumoxid, 3,3 Gew.-% Siliziumoxid, 39, 18 Gew.-% Kleber und 1,03 Gew.-% Netzmittel auf.

In einer dritten bevorzugten Ausführungsform weist die Reibflächenbeschichtung 49,12 Gew.-% Aluminiumoxid, 2,87 Gew.-% Siliziumoxid, 34,07 Gew.-% Kleber, 0,9 Gew.-% Netzmittel und etwa 13,04 Gew.-% Elastomer auf.

In einer vierten bevorzugten Ausführungsform weist die Reibflächenbeschichtung 41,99 - 31,99 Gew.-% Aluminiumoxid, 10 - 20 Gew.-% Siliziumoxid, 34,07 Gew.-% Kleber, 0,9 Gew.-% Netzmittel und etwa 13,04 Gew.-% Elastomer auf.

## Patentansprüche

1. Reibflächenbeschichtung (200) für einen Reibwerkstoff (16) eines Bremssystems, insbesondere für ein Kraftfahrzeug, einen Lastkraftwagen, ein Schienenfahrzeug, ein Luftfahrzeug unter Verwendung von Aluminiumoxid und von Siliziumoxid zur Verbesserung des tribologischen System Bremse und zur Erzielung ausreichender Reibwerte auch im nicht eingefahrenem Zustand der Bremse, insbesondere Scheibenbremse,
**dadurch gekennzeichnet,**
**dass** die Reibflächenbeschichtung (200) aus folgender Zusammensetzung besteht: 0 - 30 Gew.-% Phenolharz, 5 - 95 Gew.-% Aluminiumoxid, 0 - 20 Gew.-% Siliziumoxid, 5 - 75 Gew.-% Kleber, 0 - 10 Gew.-% Netzmittel, 0 - 50 Gew.-% Elastomer und 0 - 50 Gew.-% Füllstoff.

2. Reibflächenbeschichtung (200) nach Anspruch 1,
**dadurch gekennzeichnet,**
**dass** diese ferner 20 - 80 Gew.-%, insbesondere 50 Gew.-%, Lösungsmittel, insbesondere Wasser, aufweist.

3. Reibflächenbeschichtung (200) nach Anspruch 1 und/oder 2,
**dadurch gekennzeichnet,**
**dass** das Phenolharz ein Phenol-Resol in Wasser (70 - 80 % Festkörpergehalt) ist.

4. Reibflächenbeschichtung (200) nach einem der vorhergehenden Ansprüche,
**dadurch gekennzeichnet,**
**dass** das Aluminiumoxid, Korund in Form von Rhinalox Edelkorund weiß ist.

5. Reibflächenbeschichtung (200) nach einem der vorhergehenden Ansprüche,
**dadurch gekennzeichnet,**
**dass** das Siliziumoxid Kieselsäure, beispielsweise in Form eines hydrophoben SiO₂ als lockeres, weißes Pulver ist.

6. Reibflächenbeschichtung (200) nach einem der vorhergehenden Ansprüche,
**dadurch gekennzeichnet,**
**dass** der Kleber ein Phenol-/Kresolharz-/NBR-Kleber auf Wasserbasis (Hydrokleber) ist.

7. Reibflächenbeschichtung (200) nach einem der vorhergehenden Ansprüche,
**dadurch gekennzeichnet,**
**dass** das Netzmittel eine Mischung organischer Lösungsmittel und Additive ist.

8. Reibflächenbeschichtung (200) nach einem der vorhergehenden Ansprüche,
**dadurch gekennzeichnet,**
**dass** das Elastomer ein Gummi oder ein Gummimehl in Form eines Recyclates aus Laufflächen auf SBR/NR-Basis ist.

9. Reibflächenbeschichtung (200) nach einem der vorhergehenden Ansprüche,
**dadurch gekennzeichnet,**
**dass** der Füllstoff ein Färbemittel, insbesondere Ruß ist.

10. Reibflächenbeschichtung (200) nach einem der vorhergehenden Ansprüche,
**dadurch gekennzeichnet,**
**dass** diese 3 Gew.-% Phenolharz, 54,8 Gew.-% Aluminiumoxid, 3,2 Gew.-% Siliziumoxid, 38 Gew.-% Kleber und 1 Gew.-% Netzmittel aufweist.

11. Reibflächenbeschichtung (200) nach einem der Ansprüche 1 bis 9,
**dadurch gekennzeichnet,**
**dass** diese 56,49 Gew.-% Aluminiumoxid, 3,3 Gew.-% Siliziumoxid, 39,18 Gew.-% Kleber und 1,03 Gew.-% Netzmittel aufweist.

12. Reibflächenbeschichtung (200) nach einem der Ansprüche 1 bis 9,
**dadurch gekennzeichnet,**
**dass** diese 49,12 Gew.-% Aluminiumoxid, 2,87 Gew.-% Siliziumoxid, 34,07 Gew.-% Kleber, 0,9 Gew.-% Netzmittel und etwa 13,04 Gew.-% Elastomer aufweist.

13. Reibflächenbeschichtung (200) nach einem der Ansprüche 1 bis 9,
**dadurch gekennzeichnet,**
**dass** diese 41,99 - 31,99 Gew.-% Aluminiumoxid, 10 - 20 Gew.-% Siliziumoxid, 34,07 Gew.-% Kleber, 0,9 Gew.-% Netzmittel und etwa 13,04 Gew.-% Elastomer aufweist.

14. Bremsbelag (100), insbesondere für eine Scheibenbremse, mit einer Trägerplatte und einem auf dieser angeordneten Reibwerkstoffblock, welcher eine Reibfläche ausbildet,
**dadurch gekennzeichnet,**
**dass** auf der Reibfläche eine Reibflächenbeschichtung gemäß wenigstens einem der vorhergehenden Ansprüche vorgesehen ist.

## Claims

1. A friction surface coating (200) for a friction material (16) of a brake system, especially for a motor vehicle, a truck, a rail vehicle, an aircraft, by using aluminium oxide and silicium oxide for improving the tribological system brake and for obtaining sufficient coefficients of friction even in not run-in state of the brake,
**characterized in**
**that** the friction surface coating (200) is made of the following composition : 0 - 30 % in weight phenolic resin, 5 - 95 % in weight aluminium oxide, 0 - 20 % in weight silicium oxide, 5-75 % in weight bonding agent, 0 - 10 % in weight interlacing agent, 0 - 50 % in weight elastomer and 0 - 50 % in weight filler.

2. A friction surface coating (200) according to claim 1,
**characterized in**
**that** this friction surface coating shows moreover 20 - 80 % in weight solvent, especially 50 % in weight, especially water.

3. A friction surface coating (200) according to claim 1 and/or 2,
**characterized in**
**that** the phenolic resin is a phenol/resol in water (70 - 80 % solid content).

4. A friction surface coating (200) according to any of the preceding claims,
**characterized in**
**that** the aluminium oxide is corundum in form of Rhinalox special fused alumina white.

5. A friction surface coating (200) according to any of the preceding claims,
**characterized in**
**that** the silicium oxide is silicic acid, for example in form of a hydrophobic SiO₂ as a loose white powder.

6. A friction surface coating (200) according to any of the preceding claims,
**characterized in**
**that** the bonding agent is a phenolic/cresylic resin/NBR bonding agent (hydroadhesive).

7. A friction surface coating (200) according to any of the preceding claims,
**characterized in**
**that** the interlacing agent is a mixture of organic solvents and additives.

8. A friction surface coating (200) according to any of the preceding claims,
**characterized in**
**that** the elastomer is a rubber or a rubber flour in form of a recycled product made of treads on SBR/NR base.

9. A friction surface coating (200) according to any of the preceding claims,
**characterized in**
**that** the filler is a colouring agent, especially soot.

10. A friction surface coating (200) according to any of the preceding claims,
**characterized in**
**that** this friction surface coating shows 3 % in weight phenolic resin, 54,8 % in weight aluminium oxide, 3,2 % in weight silicium oxide, 38 % in weight bonding agent and 1 % in weight interlacing agent.

11. A friction surface coating (200) according to any of the claims 1 to 9,
**characterized in**
**that** this friction surface coating shows 56,49 % in weight aluminium oxide, 3,3 % in weight silicium oxide, 39,18 % in weight bonding agent and 1,03 % in weight interlacing agent.

12. A friction surface coating (200) according to any of the claims 1 to 9,
**characterized in**
**that** this friction surface coating shows 49,12 % in weight aluminium oxide, 2,87 % in weight silicium oxide, 34,07 % in weight bonding agent, 0,9 % in weight interlacing agent and approximately 13,04 % in weight elastomer.

13. A friction surface coating (200) according to any of the claims 1 to 9,
**characterized in**
**that** this friction surface coating shows 41,99 - 31,99 % in weight aluminium oxide, 10 - 20 % in weight silicium oxide, 34,07 % in weight bonding agent, 0,9 % in weight interlacing agent and approximately 13,04 % in weight elastomer.

14. A brake lining (100), especially for a disk brake, with a carrier plate and a friction material block placed thereon which constitutes a friction surface,
**characterized in**
**that** a friction surface coating according to at least one of the preceding claims is provided for on the friction surface.

## Revendications

1. Enduction de surface de friction (200) pour un matériau de friction (16) d'un système de freinage, en particulier pour un véhicule automobile, un camion, un véhicule sur rail, un avion, en utilisant de l'oxyde d'aluminium et de l'oxyde de silicium pour améliorer le système tribologique frein et pour obtenir des coefficients de friction suffisants même à l'état non rodé du frein, en particulier du frein à disque,
**caractérisée en ce**
**que** l'enduction de surface de friction (200) est constituée par la composition suivante : 0 à 30% en poids de résine phénolique, 5 à 95% en poids d'oxyde d'aluminium, 0 à 20% d'oxyde de silicium, 5 à 75% en poids de colle, 0 à 10% en poids d'agent mouillant, 0 à 50% en poids d'élastomère et 0 à 50% en poids de matière de rémplissage.

2. Enduction de surface de friction (200) selon la revendication 1,
**caractérisée en ce**
**que** celle-ci présente en outre 20 à 60% en poids de solvant, en particulier 50% en poids, en particulier d'eau.

3. Enduction de surface de friction (200) selon la revendication 1 et/ou 2,
**caractérisée en ce**
**que** la résine phénolique est un phénol/résol dans de l'eau (70 à 80% de taux de solides).

4. Enduction de surface de friction (200) selon l'une des revendications précédentes,
**caractérisée en ce**
**que** l'oxyde d'aluminium est du corindon sous forme de corindon raffiné blanc Rhinalox.

5. Enduction de surface de friction (200) selon Tune des revendications précédentes,
**caractérisée en ce**
**que** l'oxyde de silicium est de l'acide silicique, par exemple sous forme d'un SiO₂ hydrophobe en tant que poudre blanche peu compacte.

6. Enduction de surface de friction (200) selon l'une des revendications précédentes,
**caractérisée en ce**
**que** la colle est une résine phénolique/crésolique/colle NBR à base aqueuse (colle hydraulique).

7. Enduction de surface de friction (200) selon l'une des revendications précédentes,
**caractérisée en ce**
**que** l'agent mouillant est un mélange de solvants organiques et d'additifs.

8. Enduction de surface de friction (200) selon l'une des revendications précédentes,
**caractérisée en ce**
**que** l'élastomère est un caoutchouc ou une farine de caoutchouc sous forme d'un produit de recyclage constitué de bandes de roulement à base de SBR/NR.

9. Enduction de surface de friction (200) selon l'une des revendications précédentes,
**caractérisée en ce**
**que** la matière de remplissage est un colorant, en particulier la suie.

10. Enduction de surface de friction (200) selon l'une des revendications précédentes,
**caractérisée en ce**
**qu'**elle présente 3% en poids de résine phénolique, 54,8% en poids d'oxyde d'aluminium, 3,2% en poids d'oxyde de silicium, 38% en poids de colle et 1% en poids d'agent mouillant.

11. Enduction de surface de friction (200) selon l'une des revendications 1 à 9,
**caractérisée en ce**
**qu'**elle présente 56,49% en poids d'oxyde d'aluminium, 3,3% en poids d'oxyde de silicium, 39,18% en poids de colle et 1,03% en poids d'agent mouillant.

12. Enduction de surface de friction (200) selon l'une des revendications 1 à 9,
**caractérisée en ce**
**qu'**elle présente 49,12% en poids d'oxyde d'aluminium, 2,87% en poids d'oxyde de silicium, 34,07% en poids de colle, 0,9% en poids d'agent mouillant et à peu près 1,304% en poids d'élastomère.

13. Enduction de surface de friction (200) selon l'une des revendications 1 à 9,
**caractérisée en ce**
**qu'**elle présente 41,99 à 31,99% en poids d'oxyde d'aluminium, 10à 20% en poids d'oxyde de silicium, 34,07% en poids de colle, 0,9% en poids d'agent mouillant et à peu près 13,04% en poids d'élastomère.

14. Garniture de frein (100), en particulier pour un frein à disque, avec une plaque de support et un bloc de matériau de friction placé sur celle-ci qui forme une surface de friction,
**caractérisée en ce**
**qu'**une enduction de surface de friction selon au moins Tune des revendications précédentes est prévue sur la surface de friction.
